(19) Europäisches Patentamt
European Patent Office
Office européen des brevets

(11) **EP 3 611 666 A1**

(12) **EUROPEAN PATENT APPLICATION**
published in accordance with Art. 153(4) EPC

(43) Date of publication:
**19.02.2020 Bulletin 2020/08**

(51) Int Cl.:
**G06K 9/62** (2006.01)

(21) Application number: **18785106.8**

(86) International application number:
**PCT/CN2018/083012**

(22) Date of filing: **13.04.2018**

(87) International publication number:
**WO 2018/188653 (18.10.2018 Gazette 2018/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.04.2017 CN 201710243591**

(71) Applicants:
• **Tsinghua University**
  **Haidian District**
  **Beijing 100084 (CN)**
• **Nuctech Company Limited**
  **Beijing 100084 (CN)**

(72) Inventors:
• **ZHANG, Jian**
  **Beijing 100084 (CN)**
• **ZHAO, Zhanyong**
  **Beijing 100084 (CN)**
• **GU, Jianping**
  **Beijing 100084 (CN)**
• **LIU, Yaohong**
  **Beijing 100084 (CN)**
• **ZHAO, Ziran**
  **Beijing 100084 (CN)**

(74) Representative: **Cabinet Beau de Loménie
158, rue de l'Université
75340 Paris Cedex 07 (FR)**

(54) **INSPECTION METHOD AND INSPECTION DEVICE**

(57) An inspection device and an inspection method are disclosed. X-ray scanning is performed on the container to be inspected to obtain a transmission image; then a first vector describing a local transmission image is generated from the transmission image using a convolutional neural network; and a word vector is generated from text description of cargoes in the container as a second vector using a recurrent neural network. The first vector and the second vector are integrated to obtain a third vector representing the transmission image and the text description. A category to which the cargoes in the container belong is identified based on the third vector. According to the embodiments of the present disclosure, an approximate category of the target cargoes may be initially determined, which facilitates the judger's further determination.

Fig. 4

**Description**

**TECHNICAL FIELD**

Embodiments of the present disclosure relate to security inspection, and more particularly, to a method and device for inspecting cargoes such as containers etc. based on image information and text information.

**BACKGROUND**

Currently, radiation security inspection systems focus on analysis of X-ray images of cargoes. For example, classification of the cargoes and identification of tasks are completed using relevant knowledge of comprehension of the images. However, for cargoes which are difficult to be distinguished from each other, the cargoes are still be primarily determined based on human cognition, and human-machine assistance has not reached a level of "mutual assistance".

**SUMMARY**

In view of one or more problems in the related art, there are proposed a method and device for inspecting cargoes such as containers etc.
In an aspect of the present disclosure, there is proposed a method for inspecting a container, comprising steps of:

performing X-ray scanning on the container to be inspected to obtain a transmission image;

generating a first vector describing a local transmission image from the transmission image using a convolutional neural network;

generating a word vector from text description of cargoes in the container as a second vector using a recurrent neural network;

integrating the first vector and the second vector to obtain a third vector representing the transmission image and the text description; and

identifying a category to which the cargoes in the container belong based on the third vector.

According to an embodiment of the present disclosure, the step of identifying a category to which the cargoes in the container belong based on the third vector further comprises:

generating, from the third vector, probability values indicating that the cargoes in the container belong to certain categories based on a probability function; and

taking a category with the highest probability value as the category to which the cargoes belong.

According to an embodiment of the present disclosure, the method further comprises:
presenting a typical transmission image associated with the category to a user according to the identified category.
According to an embodiment of the present disclosure, the step of generating a word vector comprises:

performing a word segmentation operation on the text description of the cargoes in the container; and

vectorizing the text description on which the word segmentation operation is performed to obtain the word vector.

According to an embodiment of the present disclosure, the method further comprises steps of:

retrieving a corresponding typical transmission image from a typical transmission image library based on the word vector; and

presenting the retrieved typical transmission image to a user.

According to an embodiment of the present disclosure, the method further comprises steps of:

retrieving a corresponding typical transmission image from a typical transmission image library based on the first vector; and

presenting the retrieved typical transmission image to a user.

In another aspect of the present disclosure, there is proposed an inspection device, comprising:

an X-ray inspection system configured to perform X-ray scanning on the container to be inspected to obtain a transmission image;
a memory having stored thereon the transmission image; and
a processor configured to:

generate a first vector describing a local transmission image from the transmission image using a convolutional neural network;
generate a word vector from text description of cargoes in the container as a second vector using a recurrent neural network;
integrate the first vector and the second vector to obtain a third vector representing the transmission image and the text description; and
identify a category to which the cargoes in the container belong based on the third vector.

According to an embodiment of the present disclosure, the processor is configured to:

generate, from the third vector, probability values indicating that the cargoes in the container belong to certain categories based on a probability function; and

take a category with the highest probability value as the category to which the cargoes belong.

According to an embodiment of the present disclosure, the processor is further configured to:
present a typical transmission image associated with the category to a user according to the identified category.

According to an embodiment of the present disclosure, the processor is configured to:

perform a word segmentation operation on the text description of the cargoes in the container; and
vectorize the text description on which the word segmentation operation is performed to obtain the word vector.

According to an embodiment of the present disclosure, the processor is further configured to:

retrieve a corresponding typical transmission image from a typical transmission image library based on the word vector; and

present the retrieved typical transmission image to a user.

With the solutions according to the above embodiments, the approximate category of the target cargoes may be initially determined, which facilitates the judger's further determination.

## BRIEF DESCRIPTION OF THE ACCOMPANYING DRAWINGS

In order to better understand the present disclosure, the present disclosure will be described in detail according to the following accompanying drawings.

Fig. 1 illustrates a schematic structural diagram of an inspection device according to an embodiment of the present disclosure;

Fig. 2 is a schematic structural diagram illustrating a computing device contained in the inspection device illustrated in Fig. 1;

Fig. 3 illustrates a schematic structural block diagram of an inspection device according to an embodiment of the present disclosure;

Fig. 4 illustrates a schematic flowchart of an inspection method according to an embodiment of the present disclosure;

Fig. 5 illustrates a schematic diagram of matching an image of cargoes with category information according to an embodiment of the present disclosure;

Fig. 6 illustrates a schematic diagram of determining a category of cargoes using a convolutional neural network according to an embodiment of the present disclosure;

Fig. 7 illustrates a schematic diagram of retrieving a typical perspective image according to category information according to another embodiment of the present disclosure;

Fig. 8 illustrates a diagram of a word vector space relationship used in a method according to an embodiment of the present disclosure;

Fig. 9 illustrates a structural diagram of units of a recurrent neural network used in a method according to an embodiment of the present disclosure; and

Fig. 10 illustrates a schematic diagram of generating category information according to an image vector and a word vector according to an embodiment of the present disclosure.

## DETAILED DESCRIPTION

The specific embodiments of the present disclosure will be described in detail below. It should be noted that the embodiments herein are used for illustration only, without limiting the present disclosure. In the description below, a number of specific details are explained to provide better understanding of the present disclosure. However, it is apparent to those skilled in the art that the present disclosure can be implemented without these specific details. In other instances, well known circuits, materials or methods are not described specifically so as not to obscure the present disclosure.

Throughout the specification, the reference to "one embodiment," "an embodiment," "one example" or "an example" means that the specific features, structures or properties described in conjunction with the embodiment or example are included in at least one embodiment of the present disclosure. Therefore, the phrases "in one embodiment," "in an embodiment," "in one example" or "in an example" occurred in various positions throughout the specification may not necessarily refer to the same embodiment or example. Furthermore, specific features, structures or properties may be combined into one or more embodiments or examples in any appropriate combination and/or sub-combination. Moreover, it should be understood by those skilled in the art that the term "and/or" used herein means any and all combinations of one or more listed items.

In view of the problems in the related art, the embodiments of the present disclosure propose a human-machine assistance inspection technique based on X-ray images and text description to realize an intelligent analysis tool for classifying and inspecting cargoes in a specific region (a key region of interest). In an actual cargo inspection process, inspectors mostly make a determination on a local region of an image, which is also the most closely related and necessary process of human-machine "mutual assistance". In this technique, an approximate category of the target cargoes is initially determined using data analysis and image comprehension capabilities of the computer. In addition, human perception information is further introduced, especially for comprehensive cognition of local prominent regions, and more accurate classification results are given, thereby improving the effectiveness of inspection recommendations.

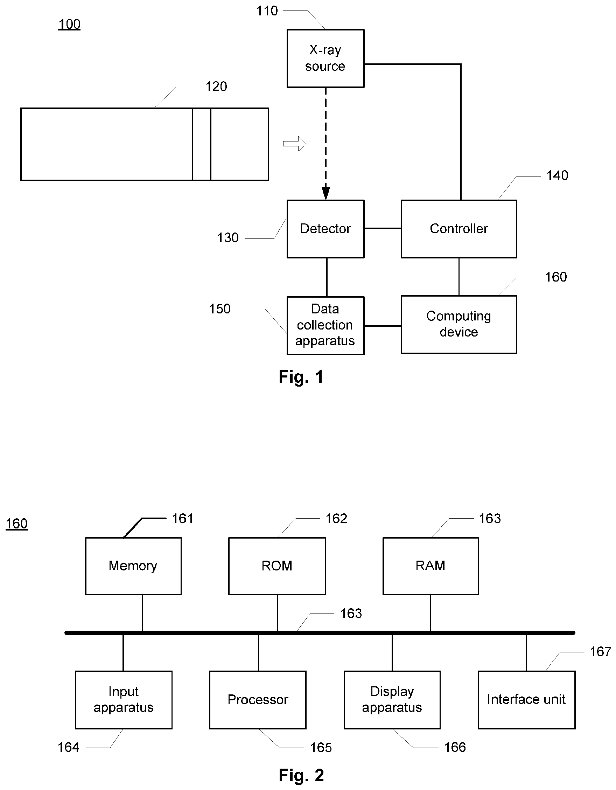

Fig. 1 illustrates a schematic structural diagram of an inspection device according to an embodiment of the present disclosure. As shown in Fig. 1, an inspection device 100 according to an embodiment of the present disclosure comprises an X-ray source 110, a detector 130, a data collection apparatus 150, a controller 140, and a computing device 160, and is configured to perform security inspection on an object 120 to be inspected such as a container truck etc., to determine, for example, whether it contains dangerous cargoes and/or suspicious items such as firearms/drugs etc. Although the detector 130 and the data collection apparatus 150 are separately described in the present embodiment, it should be understood by those skilled in the art that they may also be integrated together and are referred to as an X-ray detection and data collection device.

According to some embodiments, the X-ray source 110 described above may be an isotope, or may also be an X-ray machine or an accelerator etc. The X-ray source 110 may be a single-energy source or a dual-energy source. Thus, transmission-type scanning is performed on the object 120 to be inspected by the X-ray source 110, the detector 150, the controller 140 and the computing device 160 to obtain detection data. For example, during the traveling of the object 120 to be inspected, an operator, by means of a human-computer interaction interface of the computing device 160, issues an instruction through the controller 140 to instruct the X-ray source 110 to emit rays, which pass through the object 120 to be inspected, and are then received by the detector 130 and the data collection apparatus 150, and data may be processed by the computing device 160 to obtain a transmission image. Further, an image vector (a first vector) describing a local transmission image is further generated from the transmission image using a trained convolutional neural network, and a word vector (a second vector) is further generated from text description of cargoes in a container using a trained recurrent neural network. Then, the computing device 160 determines a category to which the cargoes in the container belong based on the image vector and the word vector. For example, the computing device 160 integrates the first vector and the second vector to obtain a third vector representing the transmission image and the text description, and identify the category to which the cargoes in the container belong based on the third vector.

Fig. 2 illustrates a schematic structural diagram of the computing device as illustrated in Fig. 1. As shown in Fig. 2, the signal detected by the detector 130 is collected by the data collector, and data is stored in a memory 161 through an interface unit 167 and a bus 163. Configuration information and a program of a computer data processor are stored in a Read Only Memory (ROM) 162. A Random Access Memory (RAM) 163 is used to temporarily store various data during an operation of the processor 165. In addition, computer programs for performing data processing such as a substance recognition program, an image processing program etc. are also stored in the memory 161. The internal bus 163 is connected to the memory 161, the read only memory 162, the random access memory 163, an input apparatus 164, the processor 165, a display apparatus 166, and the interface unit 167.

After a user inputs an operation instruction through the input apparatus 164 such as a keyboard and a mouse etc., an instruction code of the computer programs instructs the processor 165 to execute a predetermined data processing algorithm, and after a data processing result is obtained, the data processing result is displayed on the display apparatus 167 such as a Liquid Crystal Display (LCD) display etc., or the processing result is directly output in a form of hard copy such as printing etc.

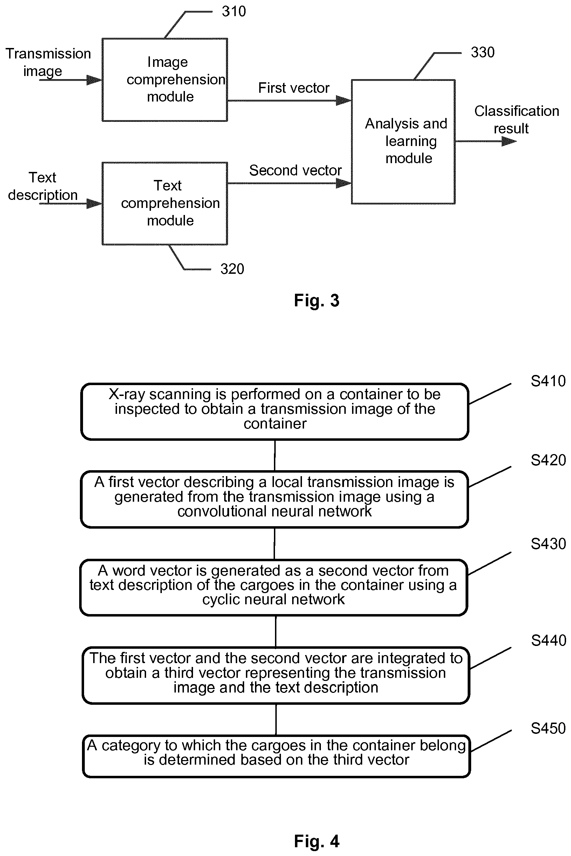

Fig. 3 illustrates a schematic structural block diagram of an inspection device according to an embodiment of the present disclosure. As shown in Fig. 3, according to the embodiment of the present disclosure, a software program is installed in the computing device 160 of the inspection device to determine a category of cargoes in a container, such as HSCODE, based on a transmission image of the cargoes in the container and text information describing the cargoes. For example, a convolutional neural network based image comprehension module 310 processes the input transmission image to obtain an image vector. A recurrent neural network based text comprehension module 320 processes the input text information to obtain a word vector. An analysis and learning module 330 determines the category to which the cargoes belong based on the image vector and the word vector.

Fig. 4 illustrates a schematic flowchart of an inspection method according to an embodiment of the present disclosure. As shown in Fig. 4, in step S410, for example, the inspection device shown in Fig. 1 performs X-ray scanning on a container to be inspected to obtain a transmission image.

In step S420, a first vector describing a local transmission image is generated from the transmission image using a convolutional neural network. For example, a convolution kernel pooling operation is performed using a local region of the transmission image of the container as an input, and then a full convolution operation is performed to output a vector representation of the transmission image as a first vector. More specifically, the local region of the transmission image of the container, as an input, is subjected to five stages of convolution and pooling operations (each stage corresponds to a group of convolution kernels and one pooling layer, wherein numbers and sizes of the convolution kernels are independent from each other) and then three layers of full convolution operations, so that the network may output a vector representation of the transmission image. Although the above embodiment has been described using five stages of convolution and pooling operations and three layers of full convolution operations, those skilled in the art may appreciate the use of other convolutional neural networks.

According to an embodiment of the present disclosure, the convolutional neural network based image comprehension module 310 is responsible for identification and analysis of cargoes for X-ray images. In an actual application scenario, the module 310 mainly comprises two parts, which are cargo category identification using a convolutional network and typical template matching.

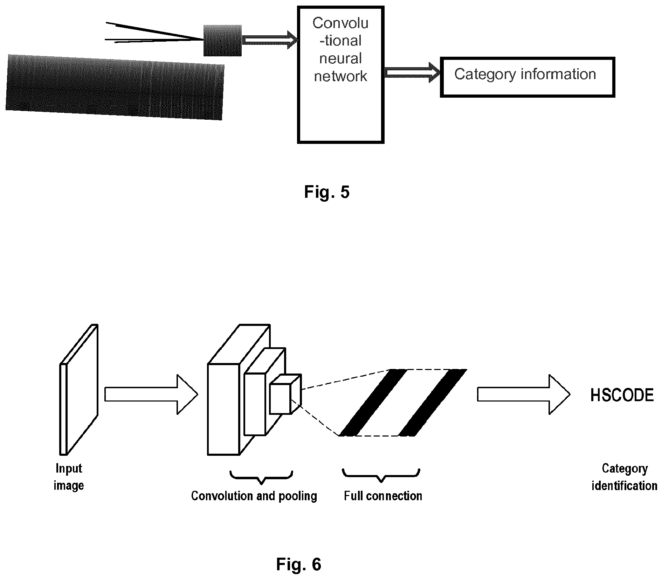

For the purpose of inspection of cargoes using X-rays, an image of a local sensitive region contains rich texture information of the category of cargoes. For a category identification problem primarily based on texture analysis, focus may be put on the comprehension of the region. The cargo category identification using the convolutional neural network performs multi-level matrix operations using an image of a specific local region as an input to generate a vector representation of the image of the local region, and determine inference information on a category to which the cargoes belong using the vector. As shown in Fig. 5, this information is represented in a form of HSCODE code for a category of the cargoes and a corresponding confidence probability.

Fig. 6 illustrates a schematic diagram of determining a category of cargoes using a convolutional neural network according to an embodiment of the present disclosure. According to the embodiment of the present disclosure, the convolutional neural network is preferably implemented using a network structure of Visual Geometry Group (VGG)-Net, but it should be understood by those skilled in the art that different embodiments may not be limited to such a structure. A local region of an X-ray image of the cargoes, as an input to the convolutional neural network, is subjected to multi-level operations such as convolution, pooling, full connection, etc., to finally obtain a vector for representing information of the image.

The convolution operation is a process in which an analog filter performs feature learning on the image in order to fully extract information from the image. When an image convolution operation is performed, multiple different convolution kernels which are different from each other may be used, and all the convolution kernels may be used to perform a convolution operation on an input respectively, and then pass all convolution results to a next operation.

The pooling operation may effectively improve the adaptability of the algorithm to a multi-scale problem. Preferably, a maximum pool sampling method is used here. Specifically, each output matrix after convolution is divided into n*m grids, where n and m represent a number of rows and a number of columns of the grids respectively, then a maximum value of each grid is taken as an output value of the grid, and finally a matrix with a size of n*m may be obtained as an output of the pooling operation.

A full connection process is to vectorize an output matrix which is obtained through multiple layers of convolution and pooling operations, and further adds a mapping operation to data by using a full connection matrix. This process improves the learning while transforming the output matrix into a vector having a length equal to a number of categories for representation to facilitate subsequent classification operations. Finally, a probabilistic processing is performed on this vector , which is completed using a Softmax function here. That is, each element in the vector represents a probability value, which corresponds to a probability that an object to be inspected belongs to a certain category. A probabilistic formula of the Softmax function may be expressed as:

$$p(c_i|v) = \frac{\exp(v_i)}{\sum_{j=1}^{k} \exp(v_j)}$$

where $v$ represents an output vector after the full connection, $v_i$, represents an $i$th element in $v$, k is a length of the vector, $c_i$ represents an $i$th category, and $p(c_i|v)$ is a probability value that the element is predicted to belong to the $i$th category according to an input. Accordingly, a category with the largest probability value may be used as a prediction result in a first phase.

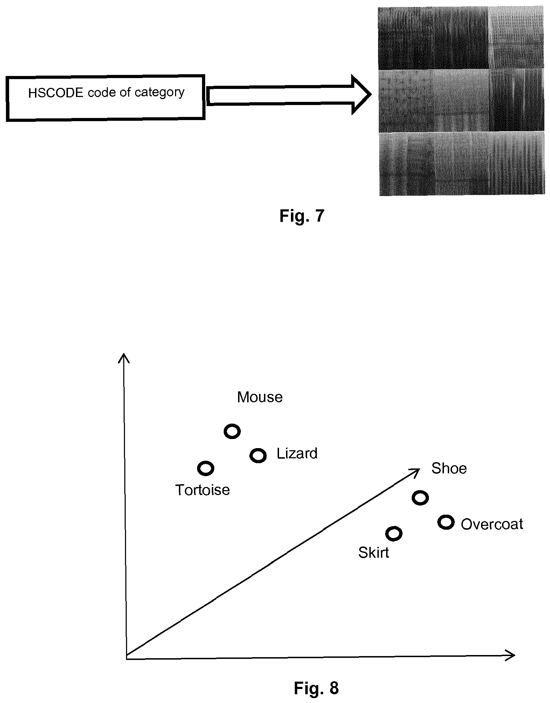

In addition, due to different experience of inspectors, the inspectors may have different degrees of memory for images of certain categories of cargoes. In this case, a typical template matching function may visually provide data of a number of typical texture image blocks of the category of cargoes using an HSCODE code given by using the convolutional neural network, so as to further confirm whether the inference information is credible, as shown in Fig. 7.

According to another embodiment of the present disclosure, typical images of cargoes with corresponding HSCODE codes may be invoked according to a prediction result given by using the convolutional neural network, and may be presented in a form of nine-square grid. Correspondingly, the inspector may compare the image of the cargoes to be inspected with the typical data for facilitating better determination.

In step S430, a word vector is generated as a second vector from text description of the cargoes in the container using a recurrent neural network. For example, the text description of the cargoes in the container, as an input to the network, is converted into a list through a word segmentation operation. Then, a vector representation of each word in the list is obtained as a second vector by querying a dictionary. More specifically, the text description of the inspector is used as an input to the network. Text description of a sentence is converted into a corresponding list of words using a basic word segmentation operation (in some examples, it is possible to remove repeated words or assign certain weights to the words). The list of words is then converted into word labels by querying an existing dictionary, and a vector representation of each word is extracted from the list. Words in the list of words are then input into a Long-Short Term Memory (LSTM) network one by one in order for prediction. After all the words in the list are processed completely using the recurrent neural network, a final vector representation for text comprehension may be generated.

According to an embodiment of the present disclosure, the Recurrent neural network based text comprehension module 320 performs system processing on the text description as an input, to finally output a typical image consistent with the text description, in order to be able to provide effective information to an inspector in a more humanized manner for determination. The module comprises parts such as a word segmentation operation part, a word vector generation part, a typical image display part etc.

Fig. 8 illustrates a diagram of a word vector space relationship used in a method according to an embodiment of the present disclosure. The typical image display part of the text comprehension module is introduced mainly for a case that an existing inspection system substantially uses an image as an input, and may only rely on an ability of the computer to understand the image, with rare use of a human perception function. In certain conditions, the inspector may not be able to determine which category the image belongs to, and may only characterize the cargoes by description such as a related texture, a related shape, etc., to invoke typical historical images for comparison. If a conventional inspection system is used, keyword information is required to be described, which indirectly becomes a burden on the inspector. If a word vector corresponding to the description is generated using the recurrent neural network, wherein the word vector naturally has the ability to perform distance learning on similar words (Fig. 8), in an actual operation, it is not necessary to completely and accurately type a fixed keyword of the cargoes, which may conveniently and accurately retrieve a desired image.

The word segmentation operation is a pre-processing operation of inputting a sentence as data (which is obvious in Chinese) to a system. Unlike previous template data retrieval with attributes or keywords as an input, the module supports users to more flexibly and completely type desired information to be contained in a form of complete sentences, but an operation manner based on sentences as basic information units is complex and inefficient. Therefore, it is necessary to properly decompose a sentence into unit words. The word segmentation operation divides a sentence into an array (or vector) representation, in which words (individual words or phrases) are elements, based on a dictionary according to the human comprehension of the language, which facilitates computer comprehension.

Text comprehension is in a domain of natural language processing, and the word segmentation technology is a basis of text mining. Especially for Chinese input, due to the innate language structure particularity, Chinese description only has obvious identification of sentences, paragraphs, etc., and lacks a clear delimiter for individual words. Therefore, a first condition of text comprehension is clear division of text description. Preferably, the word segmentation operation is performed here in a statistical and machine learning manner. In practical applications, a dictionary may be firstly established based on historical knowledge. When the word segmentation is performed, string matching may be performed using some rules. For some ambiguous words and words which are not input into the dictionary, string matching may be performed in a form of Conditional Random Fields (CRF). Specifically, a sentence is labeled with a word position (the beginning of the word, the middle of the word, the end of the word, and the single sub-word), and then a word segmentation operation is performed on the sentence using the CRF while adding, new words which are not registered in the dictionary, in the dictionary, for facilitating subsequent matching.

The word vector is a process of transforming a language description into a feature which is easy for the computer to understand and manipulate. This process is implemented entirely depending on a circular neural network. The recurrent neural network naturally has the ability to process and analyze serialized association data. Information of a large sentence may be concluded into several core elements, and words which are not obviously associated with each other may also be enriched into information which may facilitate comprehension of humans. In this system, the data after the word segmentation is performed is input as an input to the network in a form of vector, and each time a word is analyzed and learned until the processing of a last word is completed, a vector representation, referred to as a word vector, may be generated. This vector contains information of the entire sentence, and a typical image consistent with a tone may be retrieved accordingly according to the vector, or subsequent category determination may be made.

The word vector is a process of vectorizing text description which is subjected to a word segmentation operation. Preferably, the process is completed by using a Long-Short Term Memory (LSTM) recurrent neural network here. A specific operation process is to firstly convert each word in the text description into a vector, which may be encoded by using one-hot, or may be converted by using a mapping matrix having a number of rows being a number of words in the dictionary and a number of columns being a specified value. Preferably, the latter condition is applied here.

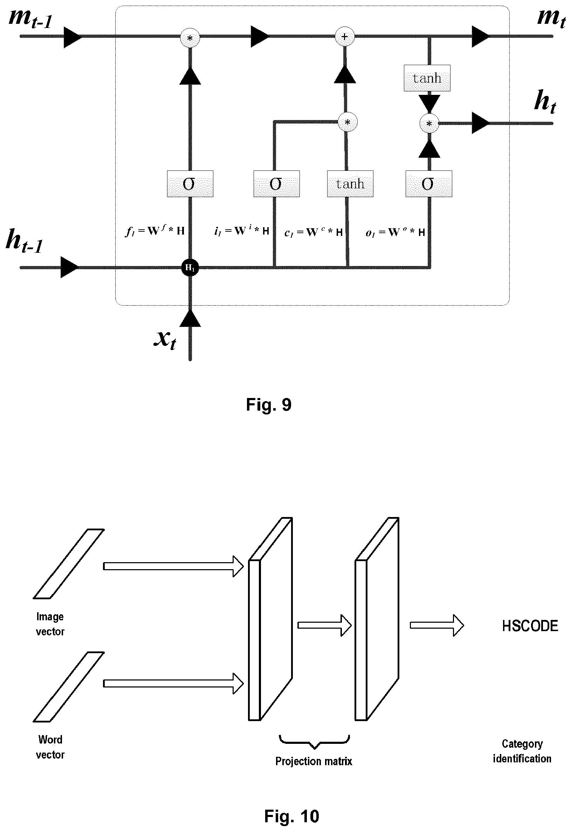

Fig. 9 illustrates a structural diagram of units of a recurrent neural network used in a method according to an embodiment of the present disclosure. After all the words are vectorized, they are reversed in an order of text description, and then an initial vector of one word is selected in order each time, and is then input into an LSTM network unit. A calculation process of the LSTM unit may be expressed as:

$$H = [x_t, h_{t-1}]$$

$$[i_t, c_t, f_t, o_t] = H * W$$

$$m_t = sigmoid(f_t) * m_{t-1} + sigmoid(i_t) * \tanh(c_t)$$

and

$$h_t = sigmoid(o_t) * \tanh(m_t)$$

where $x_t$ represents an initial vector of a $t^{th}$ word, $h_{t-1}$ is a last output of the LSTM unit, W is a weight matrix, which is a parameter matrix pre-trained using previous samples, $i_t$, $c_t$, $f_t$ and $o_t$ are network intermediate states of the $t^{th}$ word, $m_{t-1}$

is a transfer value of an intermediate state of a last word, *sigmoid*() and tanh() are referred to as activation functions, $m_t$ is a transfer value of a state of the $t^{th}$ word, and $h_t$ is a word vector generated using previous $t$ words. If the input text description contains a total of $k$ words, then the LSTM unit is processed $k$ times to finally generate a final word vector $h_k$ comprising the description information.

A typical image display part of the text description changes a conventional system to use image comprehension as a sole criterion for an inspection system to provide a result and similar display, and is a process of visualizing perception of an inspector through text. Firstly, typical image template data is manually labeled with description information, and then the labeled information is classified using a Bag of Words (BOW) method to obtain a BOW feature of each type of images. In use, after the text description input by the inspector is vectorized for representation, a correlation between this vector and a BOW feature of a typical image is calculated. Then, categories corresponding to BOW features with top three correlations are selected, and typical images in the categories are extracted for visual display.

In step S440, the first vector and the second vector are integrated to obtain a third vector representing the transmission image and the text description. In step S450, a category to which the cargoes in the container belong is determined based on the third vector. For example, probability values indicating that the cargoes in the container belong to certain categories are generated from the third vector based on a probability function (for example, a Softmax function), and a category having the largest probability value is used as the category to which the cargoes belong.

Fig. 10 illustrates a schematic diagram of generating category information from an image vector and a word vector according to an embodiment of the present disclosure. As shown in Fig. 10, the analysis and learning module 330 integrates an image comprehension capability of the computer and a human perception capability to realize new means for more accurately completing inspection tasks. The convolutional neural network based image comprehension module and the convolutional neural network based text comprehension module may perform analysis on image description or text description respectively and give corresponding results, and the comprehensive analysis and learning module may integrate the capabilities of both the convolutional neural network based image comprehension module and the convolutional neural network based text comprehension module to combine the image vector of the image comprehension part and the word vector of the text comprehension part, and may then complete a mutual learning process through a common analysis process, so as to output a more accurate prediction result.

According to an embodiment of the present disclosure, the convolutional neural network based image comprehension module and the recurrent convolutional network based text comprehension module currently perform respective cargo inspection operations for the image description and the text description, and the comprehensive analysis and learning module of the system effectively combines both of them to better assist the inspector in completing the inspection.

For example, the convolutional network for image comprehension and the recurrent neural network for text comprehension are trained respectively to calculate their respective losses, so that initial learning of the two networks may be completed, and then the image representation vector of the conventional network and the word vector output by the recurrent neural network are integrated, and are subjected to projection mapping, so that the Softmax function is also used to obtain the predicted category which is obtained by combining the two networks. In this way, the two types of information are effectively combined, and since the two networks may be in one common training process during a training phase, when feedback is adjusted, adjustment of each network may be intervened and adjusted by another network, which increases the learning of the entire system.

More specifically, for the convolutional neural network for image comprehension, a local region of a transmission image of a container, as an input to the VGG network, is subjected to five stages of convolution and pooling operations (each stage corresponds to a group of convolution kernels and one pooling layer, wherein numbers and sizes of the convolution kernels are independent from each other), and then is subjected to three layers of full convolution operations, and an output of a last convolution layer is a vector representation **I** of the transmission image. For the recurrent neural network for text comprehension, text description of an inspector is used as an input to the network. Text description of a sentence is converted into a corresponding list of words using a basic word segmentation operation (in some examples, it is possible to remove repeated words or assign certain weights to the words). The list of words is then converted into word labels by querying an existing dictionary, and a vector representation of each word is extracted from the list. Words in the list of words are then input into a Long-Short Term Memory (LSTM) network one by one in order. After all the words in the list are processed using the recurrent neural network, a final vector representation **T** for text comprehension may be generated. Next, the vector representation **I** of the image and the vector representation **T** of the text are spliced into a vector, and after the vector is subjected to a 2-layer full convolutional network, a category is predicted using a Softmax layer, so that a container cargo category prediction and prompt function which integrates image information and text information may be realized. The network training and learning process may be used to optimize parameters of the learning network using methods such as Stochastic Gradient Descent (SGD), Stochastic Gradient Descent (BGD) etc. The entire network structure contains their own (image, text) processing networks, and there is a common learning process which integrates two types of information. When each network is adjusted, it may be intervened and adjusted by another network to some extent, which increases Information utilization and learning of the system.

According to the above embodiments, an approximate category of the target cargoes is initially determined using data analysis and image comprehension capabilities of the computer. In addition, human perception information is further introduced, especially for comprehensive cognition of local prominent regions, and more accurate classification results are given, thereby improving the effectiveness of inspection recommendations.

The foregoing detailed description has set forth various embodiments of the inspection device and method via the use of diagrams, flowcharts, and/or examples. In a case that such diagrams, flowcharts, and/or examples contain one or more functions and/or operations, it will be understood by those skilled in the art that each function and/or operation within such diagrams, flowcharts or examples may be implemented, individually and/or collectively, by a wide range of structures, hardware, software, firmware, or virtually any combination thereof. In one embodiment, several portions of the subject matter described in the embodiments of the present disclosure may be implemented via Application Specific Integrated Circuits (ASICs), Field Programmable Gate Arrays (FPGAs), Digital Signal Processors (DSPs), or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of those skilled in the art in ray of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (e.g., a fiber optic cable, a waveguide, a wired communications link, a wireless communication link, etc.).

While the present disclosure has been described with reference to several typical embodiments, it is apparent to those skilled in the art that the terms are used for illustration and explanation purpose and not for limitation. The present disclosure may be practiced in various forms without departing from the spirit or essence of the present disclosure. It should be understood that the embodiments are not limited to any of the foregoing details, and shall be interpreted broadly within the spirit and scope as defined by the following claims. Therefore, all of modifications and alternatives falling within the scope of the claims or equivalents thereof are to be encompassed by the claims as attached.

## Claims

1. A method for inspecting a container, comprising steps of:

   performing X-ray scanning on the container to be inspected to obtain a transmission image;
   generating a first vector describing a local transmission image from the transmission image using a convolutional neural network;
   generating a word vector from text description of cargoes in the container as a second vector using a recurrent neural network;
   integrating the first vector and the second vector to obtain a third vector representing the transmission image and the text description; and
   identifying a category to which the cargoes in the container belong based on the third vector.

2. The method according to claim 1, wherein the step of identifying a category to which the cargoes in the container belong based on the third vector further comprises:

   generating, from the third vector, probability values indicating that the cargoes in the container belong to certain categories based on a probability function; and
   taking a category with the highest probability value as the category to which the cargoes belong.

3. The method according to claim 2, further comprising:
   presenting a typical transmission image associated with the category to a user according to the identified category.

4. The method according to claim 1, wherein the step of generating a word vector comprises:

   performing a word segmentation operation on the text description of the cargoes in the container; and
   vectorizing the text description on which the word segmentation operation is performed to obtain the word vector.

**5.** The method according to claim 4, further comprising steps of:

retrieving a corresponding typical transmission image from a typical transmission image library based on the word vector; and

presenting the retrieved typical transmission image to a user.

**6.** The method according to claim 1, further comprising steps of:

retrieving a corresponding typical transmission image from a typical transmission image library based on the first vector; and

presenting the retrieved typical transmission image to a user.

**7.** An inspection device, comprising:

an X-ray inspection system configured to perform X-ray scanning on the container to be inspected to obtain a transmission image;

a memory having stored thereon the transmission image; and

a processor configured to:

generate a first vector describing a local transmission image from the transmission image using a convolutional neural network;

generate a word vector from text description of cargoes in the container as a second vector using a recurrent neural network;

integrate the first vector and the second vector to obtain a third vector representing the transmission image and the text description; and

identify a category to which the cargoes in the container belong based on the third vector.

**8.** The inspection device according to claim 7, wherein the processor is configured to:

generate, from the third vector, probability values indicating that the cargoes in the container belong to certain categories based on a probability function; and

take a category with the highest probability value as the category to which the cargoes belong.

**9.** The inspection device according to claim 8, wherein the processor is further configured to:

present a typical transmission image associated with the category to a user according to the identified category.

**10.** The inspection device according to claim 7, wherein the processor is configured to:

perform a word segmentation operation on the text description of the cargoes in the container; and

vectorize the text description on which the word segmentation operation is performed to obtain the word vector.

**11.** The inspection device according to claim 10, wherein the processor is further configured to:

retrieve a corresponding typical transmission image from a typical transmission image library based on the word vector; and

present the retrieved typical transmission image to a user.

100

110

X-ray
source

120

130    Detector    Controller    140

150    Data
collection
apparatus    Computing
device    160

**Fig. 1**

160

Memory    161    ROM    162    RAM    163

163

Input
apparatus    Processor    Display
apparatus    Interface unit    167

164    165    166

**Fig. 2**

**Transmission image** → [Image comprehension module — 310] → **First vector** → [Analysis and learning module — 330] → **Classification result**

**Text description** → [Text comprehension module — 320] → **Second vector** → [Analysis and learning module — 330]

**Fig. 3**

S410 — X-ray scanning is performed on a container to be inspected to obtain a transmission image of the container

S420 — A first vector describing a local transmission image is generated from the transmission image using a convolutional neural network

S430 — A word vector is generated as a second vector from text description of the cargoes in the container using a cyclic neural network

S440 — The first vector and the second vector are integrated to obtain a third vector representing the transmission image and the text description

S450 — A category to which the cargoes in the container belong is determined based on the third vector

**Fig. 4**

EP 3 611 666 A1

Fig. 5

Input
image

Convolution and pooling

Full connection

HSCODE

Category
identification

Fig. 6

13

HSCODE code of category

**Fig. 7**

Mouse

Lizard

Tortoise

Shoe

Overcoat

Skirt

**Fig. 8**

$m_{t-1}$

$m_t$

$h_t$

$f_l = \mathbf{W}^f * \mathbf{H}$     $i_l = \mathbf{W}^i * \mathbf{H}$   $c_l = \mathbf{W}^c * \mathbf{H}$    $o_l = \mathbf{W}^o * \mathbf{H}$

$h_{t-1}$

$x_t$

**Fig. 9**

Image
vector

Word
vector

Projection matrix

HSCODE

Category
identification

**Fig. 10**

# INTERNATIONAL SEARCH REPORT

| | International application No. |
|---|---|
| | PCT/CN2018/083012 |

## A. CLASSIFICATION OF SUBJECT MATTER

G06K 9/62 (2006.01) i

According to International Patent Classification (IPC) or to both national classification and IPC

## B. FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 检查, 扫描, 神经网络, 货物, 集装箱, x 射线, 透射图像, 向量, check, scan, neural network, goods, container, x ray, transmission, image, vector

## C. DOCUMENTS CONSIDERED TO BE RELEVANT

| Category* | Citation of document, with indication, where appropriate, of the relevant passages | Relevant to claim No. |
|---|---|---|
| A | CN 104751163 A (NUCTECH COMPANY LIMITED) 01 July 2015 (01.07.2015), description, paragraphs [0006]-[0023] | 1-11 |
| A | CN 105784732 A (NUCTECH COMPANY LIMITED) 20 July 2016 (20.07.2016), entire document | 1-11 |
| A | WO 2015062352 A1 (NUCTECH COMPANY LIMITED) 07 May 2015 (07.05.2015),entire document | 1-11 |
| A | 张健等. 神经网络模型在 X 射线图像融合中的应用. CT 理论与应用研究. 30 June 2011 (30.06.2011), 20(2), pages 235-243. (ZHANG, Jian et al. The Application of Neural Network Model for X-ray Image Fusion. Computerized Tomography Theory and Applications.) | 1-11 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 17 May 2018 | 30 May 2018 |

| Name and mailing address of the ISA | Authorized officer |
|---|---|
| State Intellectual Property Office of the P. R. China | |
| No. 6, Xitucheng Road, Jimenqiao | LI, Ping |
| Haidian District, Beijing 100088, China | |
| Facsimile No. (86-10) 62019451 | Telephone No. (86-10) 53961638 |

Form PCT/ISA /210 (second sheet) (July 2009)

**INTERNATIONAL SEARCH REPORT**
Information on patent family members

| International application No. |
| --- |
| PCT/CN2018/083012 |

| Patent Documents referred in the Report | Publication Date | Patent Family | Publication Date |
| --- | --- | --- | --- |
| CN 104751163 A | 01 July 2015 | WO 2015096677 A1 | 02 July 2015 |
| | | US 2015189239 A1 | 02 July 2015 |
| | | JP 2017507391 A | 16 March 2017 |
| | | ES 2656315 T3 | 26 February 2018 |
| | | EP 2889838 A1 | 01 July 2015 |
| | | KR 20160108373 A | 19 September 2016 |
| CN 105784732 A | 20 July 2016 | None | |
| WO 2015062352 A1 | 07 May 2015 | CN 104567758 A | 29 April 2015 |
| | | US 2015117602 A1 | 30 April 2015 |
| | | EP 2869094 A1 | 06 May 2015 |

Form PCT/ISA /210 (patent family annex) (July 2009)